# EUROPEAN PATENT APPLICATION

(11) **EP 3 235 897 A1**
(43) Date of publication of application: **25.10.2017**
(21) Application number: 17166754.6
(22) Date of filing: 18.04.2017
(51) Int. Cl.: C10M 175/00, C10M 175/04, C02F 1/50, C02F 1/68, C02F 1/00, C02F 103/34

(54) **DEVICE FOR THE CONTINUOUS DISINFECTION OF COOLING LUBRICANT SOLUTIONS**

(30) Priority: 18.04.2016 IT UA20162688
(71) Applicant: Solving Solutions S.r.l., 24020 Fiorano al Serio (BG) (IT)
(72) Inventor: AIDOVEC, Ivan, 24020 Fiorano al Serio (BG) (IT); FILIPPOZZI, Cristian, 24020 Fiorano al Serio (BG) (IT)
(74) Representative: Bruni, Giovanni

(57) **Abstract**

Device (10) for the continuous disinfection of a cooling lubricant oil of solutions and wash waters, comprising at least one granular element (20), provided with silver ions and tourmaline and in the form of a solid and porous granular elements, said device (10) being characterized by a porous casing (30)which contains in its interior said at least one granular element (20) and is provided with a reticular meshweave (40) that permits the continuous passage through the porous casing (30) of the a cooling lubricant oil to be treated.

## Description

### Field of the invention

The present invention relates to a device for the continuous disinfection of a cooling lubricant oil of solutions and wash waters. In particular, the present device uses a technology with silver ions and tourmaline in the form of a solid and porous granular element that allows to break down and keep below control the bacterial growth of oily emulsions and making possible their recovery and re-use for the pointing. The use of said device prevents the rise to critical levels of the most common bacterial strains and determines the killing inside the tubs where lubricant oils are contained.

### Background art

As it is known, colloidal silver ions intercept only the negative and Gram anaerobic bacteria, inhibiting their respiratory functions. By joining the DNA and RNA of the bacteria, immediately, silver ions stop their reproductive ability. Used for some time in medicine, totally nontoxic for humans, their use avoid the use of the most common and highly toxic antibacterial substances and they are also cheaper.

The use of silver salts as bactericides is widely known and is described, for example, in U.S. Patent N. US2010203161. It describes a solid biocide (eg. comprising silver salts) and a composite material for the absorption of contaminants and the release of active ingredients for the purification and long-term conservation of a liquid. Such biocides and composite materials can be added simultaneously to the fluid to be purified, however, to obtain an optimum effect, it is convenient to treat the liquid to be purified first only with the composite material for the absorption and the release of the active ingredients, and then to add surfactant solid biocides.

Also the use of silver and tourmaline components as well as bactericide is widely known. An example is represented by the Chinese document N. CN102293782 which describes a detailed method for the preparation of new antimicrobial compounds containing silver and tourmaline powder. Generally, silver ions are provided in different ways for bringing the liquid into contact with the silver surface. Usually, what is used is a silver salt powder directly introduced in the liquid to be treated, then directly into the tub where the oily emulsion is contained. However, such use is a little effective, the oil surrounds the silver salts powder and makes it lose its antibacterial ability. Additionally, the amount of dust is related to refilling and not to the size of the tub and usually tends to go to surface instead to stay on the bottom where the pumping takes place and where, then would get more disinfectant ability. The state of the art does not know antibacterial device for the continuous disinfection of a cooling lubricant oil of solutions and wash waters able to overcome the above mentioned drawbacks.

### Summary of the invention

Aim of the present invention is to provide an antibacterial device for the continuous disinfection of a cooling lubricant oil of solutions and wash waters that is comfortable and able to be easily sized for the tub in which it is used.

In particular, the innovative device covered by the present invention, based on the constant release of silver ions, prevents and suppresses the bacterial loads present in oily emulsions, used for example in the machine for the chips removal.

In particular the present device uses a technology with silver ions and tourmaline in the form of solid and porous granular elements, so called pellets, inserted inside a porous casing which allows the passage of the emulsion inside it and capable of containing said granular elements so that they are not dispersed within the tubs. Said casing preferably, but not limited to, is of spherical shape with mesh fence and of stainless steel, shaped as a galvanized basket, a sock or a polycarbonate container, etc., so that there is a continuous exchange between the liquid and the granular elements. The present device also allows an appropriate dosage of the product quantity for volume of emulsion to be purified inside of a tub.

In fact, the porous casing allows to correctly measure the amount of solid and porous granular elements to be inserted in it according to the volume of oil to be treated. In addition, for very high oil volumes, more spherical casing can also be used to secure an appropriate disinfection.

According to the present invention, therefore, the device comprises silver and tourmaline ions in the form of solid and porous granular elements inside a porous stainless steel mesh casing that allows to break down and keep under control the bacterial growth through the continuous release of silver ions due to the continuous passage inside the emulsion to be treated. The device having the features as specified in the attached independent claim. Further embodiments of the invention, preferred and / or particularly advantageous, are described in detail in the dependent claims.

### Brief description of the drawings

The different embodiments of the invention will now be described, by way of examples, with reference to the accompanying drawings in which::

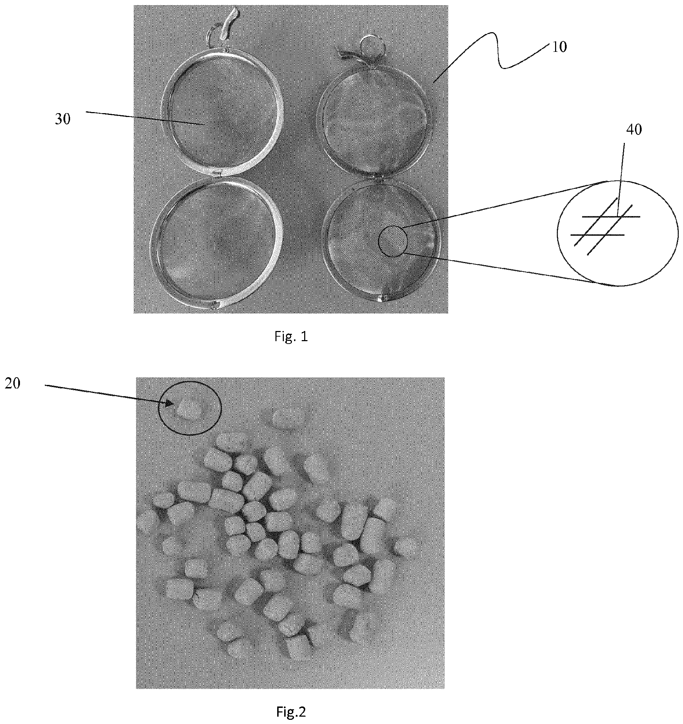

Figure 1 shows the device in a spherical configuration without the granular elements according to an embodiment of the present invention;
Figure 2 shows the granular elements contained in the device according to the present invention;

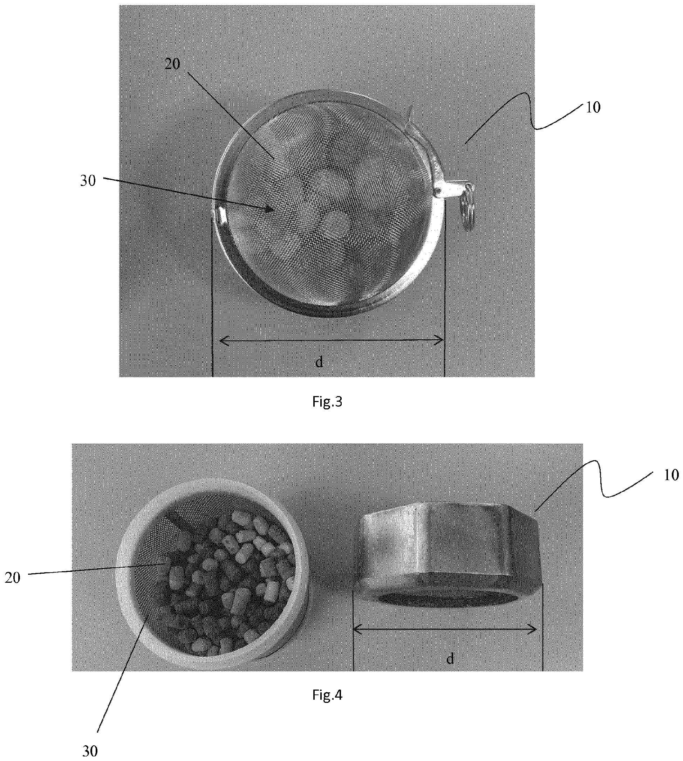

Figure 3 shows the device of Fig.1 containing inside it the granular elements according to an embodiment of the present invention;
Figure 4 shows the device in a basket configuration according to a second embodiment of the present invention;

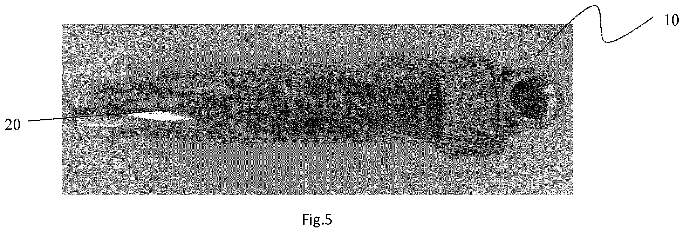

Figure 5 shows the device in a polycarbonate container configuration according to a third embodiment of the present invention.

### Detailed description

Referring now to the above figures, according to a preferred embodiment of the present invention, a device 10 for the continuous disinfection of a cooling lubricant oil of solutions and wash waters is described. The device comprises, in its essence, at least one solid and porous granular element 20. Said element 20 is an extruded pellet. The device further comprises a porous casing 30, preferably but not limited, to a spherical shape with a diameter equal to 70 mm, with reticular meshweave comprising meshes of 18/10 stainless steel, and suitable to contain at least one granular element 20. Said porous casing can also have a galvanized basket shape with diameter equal to 160 mm and height equal to150 mm for tubs larger than 3000lt, a socking or polycarbonate container shape with diameter equal to 80 mm and height equal to 550 mm, for tubs larger than 5000 It.

The granular element 20 is composed of silver ions or Silver salts nano-parcels classified as biocides, bonding polymers classified for food use in class H1 (according to the International regulation edited with the Epy system, May 2015 and ISO certified) and a ionized minerals mix such as silver in an amount of 0.1 mg /l, Arsenic in an amount <0.01 mg / l, Antimony in an amount <0.001 mg /l, Cadmium in an amount <0.001 mg /l, Chromium in an amount <0.01 mg /l, Copper in an amount of 0.1 mg /l, Mercury in an amount <0.01 mg /l, Molybdenum in an amount <0.01 mg /l, Nickel in an amount <0.002 mg / l, Lead in an amount <0.01 mg / l, and Selenium in an amount <0.002 mg / l. Additional components in the granular element 20 can be of ceramic type, having in aqueous solution with pH <9 suitable for use in washing waters but not in water emulsions, and of magnetic type (eg. neodymium) capable of energize the tourmaline at temperatures <40° C and of carry out their negative ionizing function. In the granular element 20 composition is not present any glass and said granular element is not contained or placed on any material in the fabric form. The granular element 20 is insoluble in water and non - toxic, since it uses a completely natural silver salt (and not pure silver)l to neutralize the bacteria. If inadvertently a pellet is broken, would not happen anything, since it is a solid composed of natural and non-toxic substances. Said solid and porous granular element 20 has a staining 20 gray / brown and is not soluble in water. The apparent specific weight of a single granular element is equal to 1150kg /m3.

The porous casing 30 containing the granules 20 must be positioned as close as possible to the return pumps 50 of a tub, however, in the area of most oily emulsion. The porous casing 30 can be positioned at a half the height of the tub 50 and the lubricant oil has to be always maintained above the porous casing 30. Said porous casing 30 could be periodically cleaned with compressed air for eliminate any residual production, for example chips, shaping, etc., from the reticular meshweave 40.

To allow for a correct antibacterial effectiveness, preferably, the porous casing 30 have to be present in an amount equal to one porous casing 30 every 500/l tub (1:500), as shown in Table 1.

**Table 1**

| N. Casing | Liter/Tub |
|---|---|
| 1 | 0/500 |
| 2 | 500/1000 |
| 3 | 1000/1500 |
| 4 | 1500/2000 |

The advantages of the present device are many: first of all is a simple device but effective in its realization; allows the optimum use of the antibacterial potential of silver salts with minimal use of the product; It has a very limited cost if compared with the solutions actually known.

Even if at least an embodiment was described in the brief and detailed description, it is to be intended that there exist many other variants in the protection scope of the invention. Further, it is to be intended that said embodiment or embodiments described are only example and do not limit in any way the protection scope of the invention and its application or configurations. The brief and detailed description give instead the experts in the field a convenient guide to implement at least an embodiment, while it is to be intended that many variations of the function and elements assembly here described can be made without departing from the protection scope of the invention encompassed by the appended claims and/or technical/legal equivalents thereof.

## Claims

1. Device (10) for the continuous disinfection of a cooling lubricant oil of solutions and wash waters, comprising at least one granular element (20), provided with silver ions and tourmaline and in the form of a solid and porous granular elements, said device (10) being **characterized by** a porous casing (30)which contains in its interior said at least one granular element (20) and is provided with a reticular meshweave (40) that permits the continuous passage through the porous casing (30) of the a cooling lubricant oil to be treated.

2. Device (10) according to claim 1, **characterized in that** said granular element (20) is an extruded pellet.

3. Device (10) according to claim 1 or 2, **characterized in that** said porous casing (30) is spherical shaped with a diameter equal to 70 mm.

4. Device (10) according to claim 1 or 2, **characterized in that** said porous casing (30) is a galvanized basket with a diameter equal to 160 mm and height equal to 150 mm.

5. Device (10) according to claim 1 or 2, **characterized in that** said porous casing (30) is a polycarbonate casing with a diameter equal to 80 mm and height equal to 550 mm.

6. Device (10) according to one of claims from 1 to 5, **characterized in that** said at least one granular element (20) is solid, porous and insoluble in water.

7. Device (10) according to one of claims from 1 to 6, wherein said at least one granular element (20) comprises a biocide and a ionized minerals mixture.

8. Device (10) according to claim 7, **characterized in that** said biocide is a silver salt.

9. Device (10) according to claim 7, **characterized in that** said ionized minerals mixture includes Silver, Arsenic, Antimony, Cadmium, Chromium, Copper, Mercury, Molybdenum, Nickel, Lead, and Selenium.

10. Device (10) according to one of the preceding claims, wherein said at least one granular element (20) comprises a ceramic-type component with pH <9 in water solution.

11. Device (10) according to one of the preceding claims, wherein said at least one granular element (20) comprises a magnetic type component capable of exciting the tourmaline at temperatures <40 ° C and carry out its ionizing negative function.

12. Device (10) according to one of the preceding claims, wherein the apparent specific weight of said at least one granular element (20) is equal to 1150kg / dm3.

13. Device (10) according to one of the preceding claims, wherein said casing (30) is positioned at about half the height of a tub (50) and the level of the cooling lubricant oil must always be maintained above said porous casing (30).

14. Device (10) according to one of the preceding claims, **characterized in that** said porous casing (30) is present in a number equal to 1 to 500 l / tub.
